# EUROPÄISCHE PATENTSCHRIFT

(11) **EP 3 854 570 B1**
(45) Veröffentlichungstag und Bekanntmachung des Hinweises auf die Patenterteilung: **10.01.2024**
(21) Anmeldenummer: 21152927.6
(22) Anmeldetag: 22.01.2021
(51) Int. Cl.: B29C 64/165, B29C 64/295, B29C 64/314, B33Y 10/00, B33Y 30/00, B33Y 40/10, B33Y 70/00

(54) **VERFAHREN ZUM HERSTELLEN EINES DREIDIMENSIONALEN FORMTEILS**
METHOD FOR PRODUCING A THREE-DIMENSIONAL MOULDED PART
PROCÉDÉ DE FABRICATION D'UNE PIÈCE MOULÉE TRIDIMENSIONNELLE

(30) Priorität: 24.01.2020 DE 102020101783
(43) Veröffentlichungstag der Anmeldung: 28.07.2021
(73) Patentinhaber: Additive Elements GmbH, 82152 Planegg - München (DE)
(72) Erfinder: Kramer, Thilo, 80339 München (DE); Günther, Johannes, 82152 Planegg (DE); Pietzner, Daniel, 80997 München (DE)
(74) Vertreter: 2s-ip Schramm Schneider Bertagnoll Patent- und Rechtsanwälte Part mbB

(56) Entgegenhaltungen:
- EP-A1- 3 560 713
- WO-A1-2016/101942
- DE-A1-102018 100 508
- US-A1- 2011 206 569
- US-A1- 2019 054 690

## Beschreibung

### Gebiet der Erfindung

Die Erfindung betrifft ein Verfahren zum Herstellen eines dreidimensionalen Formteils in einem sogenannten Binder Jetting Verfahren.

Das Dokument EP 3 560 713 A1 offenbart ein Verfahren zum Aufbau von Kunststoff-Bauteilen durch schichtweises Aufbringen von Kunststoffpulver und selektives Bedrucken mit einer polymerisierbaren Flüssigkeit in einem Bauraum eines 3D-Druckers, wobei die Polymerisation der Flüssigkeit aktiv gesteuert wird.

### Hintergrund der Erfindung

Zur additiven Herstellung von Formteilen sind verschiedene 3D-Druck-Verfahren bekannt. Hierbei wird das herzustellende Formteil mit Hilfe eines 3D-Druckers schichtweise aufgebaut.

Ein allgemein aus dem Stand der Technik bekanntes Verfahren zum additiven Herstellen eines Formteils ist das sogenannte Binder-Jetting-Verfahren. Beim Binder-Jetting-Verfahren wird eine Partikelschicht aus einem pulverförmigen Ausgangsmaterial an ausgewählten Stellen mit einer Flüssigkeit (auch Binder genannt) verklebt, um so schichtweise das gewünschte Formteil zu erzeugen. Das additive Herstellen eines Formteils nach dem Binder-Jetting-Verfahren findet im Allgemeinen bei Raumtemperatur statt. Mit einem Druckkopf, mit dem der Binder an ausgewählten Stellen der Partikelschicht aufgetragen wird, werden die zu verfestigenden Bereiche des herzustellenden Formteils definiert.

Das Binder-Jetting-Verfahren ermöglicht eine hohe Aufbaugeschwindigkeit, die auch bei großen Formteilen bzw. Bauteilen erhalten bleibt. Entsprechend wird der Prozess oft für großvolumige Bauteile verwendet.

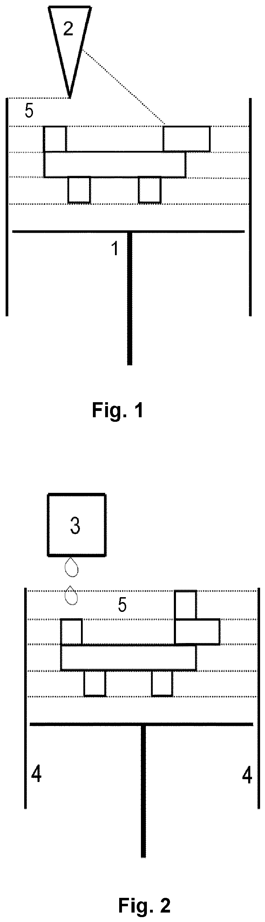

**Fig.** 1 zeigt schematisch einen aus dem Stand der Technik bekannten 3D-Drucker, mit dem Formteile nach dem Binder-Jetting-Verfahren hergestellt werden können, als einen kartesischen Roboter während des Prozessschrittes "Ausgangsmaterial einbringen". Fig. 2 zeigt den in Fig. 1 gezeigten 3D-Drucker während des Prozessschrittes "Binder aufbringen".

Der 3D-Drucker umfasst eine verfahrbare Plattform 1, einen Pulverbeschichter 2, der mit Hilfe von Maschinenachsen verfahren wird, und einen Druckkopf 3 mit einer Dosiervorrichtung für die Flüssigkeit bzw. Binder. Der Druckkopf 3 kann mit einem Achsensystem über die vom Pulverbeschichter 2 erzeugte Partikelschicht 5 bewegt werden. Um die Partikelschicht zu stützen, können Wände 4 vorgesehen werden, die dicht an der Plattform 1 anliegen.

Die Plattform 1 mit den Wänden 4 wird oft als wechselbarer Bauraum zusammengefasst, der so konzipiert ist, dass er nach einem vollendeten Bauvorgang vom Rest des 3D-Druckers losgelöst und durch einen neuen leeren Bauraum ersetzt werden kann.

Der Pulverbeschichter 2 ist über die Breite des Bauraums verfahrbar und dient sowohl als Dosier- als auch als Nivelliervorrichtung für das Pulver (Ausgangsmaterial, mit dem das Formteil hergestellt wird) und wird regelmäßig aus einem hier nicht dargestellten Pulvervorratsbehälter nachgefüllt. Die Nivelliervorrichtung ist meist als rotierende Walze oder vibrierende Klinge ausgeführt. Der Pulverbeschichter 2 weist entweder eine kontinuierlich vibrierende Dosiervorrichtung vor der Nivelliervorrichtung auf, oder er wirft Pulver ab seiner Anfangsposition aus.

Der Druckkopf 3 besteht aus einem oder mehreren Druckmodulen, der nach dem Dot-On-Demand Prinzip funktioniert. Jedes Modul beinhaltet mehrere hundert bis tausend Düsen, die positionsgesteuert Tropfen des Binders auswerfen. Durch Kombination und Lage der Druckmodule im Druckkopf kann eine entsprechende Druckauflösung und -breite realisiert werden. Versorgungsschläuche leiten die Druckflüssigkeit zum Druckkopf, der auch selbst einen Tank zur Regelung des benötigten Flüssigkeitsdrucks beinhalten kann.

Bevor mit dem eigentlichen Bauprozess begonnen wird, wird die Plattform 1 mit einer Schicht Pulver bedeckt und mit dem Pulverbeschichter 2 nivelliert.

Während des Druckvorganges werden die Schritte "Plattform senken", "Pulverschicht einbringen" und "Bedrucken" zyklisch wiederholt:
Plattform senken: Die Plattform 1 wird um eine vorbestimmte Schichtstärke bzw. Schichtdicke gesenkt.

Schicht auflegen: Der Pulverbeschichter 2 fährt über das Baufeld und verfüllt dabei die durch das Absenken der Plattform entstandene Senke mit Pulver. Zugleich nivelliert er das Pulver, damit wieder eine ebene Pulverfläche entsteht.

Bedrucken: Der Druckkopf 3 fährt das Baufeld vorzugsweise streifenweise ab und bedruckt selektiv die Pulverebene bzw. Partikelschicht 5 dort mit Flüssigkeit (Bindemittel), wo sich das Bauteil mit der aktuellen Bauebene schneidet. Im Stand der Technik wird nur so viel Bindemittel auf die Pulverebene bzw. Partikelschicht 5 aufgebracht, dass dieses maximal 10% des Hohlraumes zwischen den Partikeln des zu bedruckenden Bereichs einnimmt. Ein größerer Anteil an Bindemittel im Hohlraum zwischen den Partikeln führt im Stand der Technik zu den weiter unten beschriebenen Nachteilen.

Der Bauraum ist nun mit Pulver angefüllt, das teilweise mit Flüssigkeit (Bindemittel) befeuchtet wurde. Nach einer Verfestigungszeit werden das lose Pulver und das Bauteil aus dem Bauraum entnommen. Das Bauteil wird danach gesäubert. Das restliche Pulver kann je nach Verfahren wiederverwendet werden.

Grundsätzlich erhält man mit dem aus dem Stand der Technik bekannten Binder-Jetting-Verfahren und bei der Verwendung eines Polymerpulvers als Ausgangsmaterial poröse Bauteile, da die Pulverschüttung lediglich mit dem Binder benetzt wird, wodurch die Partikel des Polymerpulvers verklebt werden. Die so hergestellten Bauteile besitzen eine geringe Festigkeit. Die Oberflächenqualität entspricht der Rauigkeit der Pulverkörner. Der Verzug bzw. die Schwindung und damit die Maßhaltigkeit liegen in einem Toleranzbereich, der für den häufigsten Anwendungsbereich, dem anschließenden Metallguss, meist ausreichend ist.

Selten kann ein Bauteil, so wie es im 3D-Drucker nach dem Binder-Jetting-Verfahren und bei der Verwendung eines Polymerpulvers als Ausgangsmaterial entsteht, direkt verwendet werden. Das Bauteil muss üblicherweise noch getrocknet werden. Für die Verwendung als Positiv für den Metallguss wird es anschließend zusätzlich mit Wachs getränkt bzw. überzogen, um eine wasserdichte Oberfläche zu erzeugen. Für die Verwendung ohne Umformungsvorgang wird das poröse Bauteil mit einem selbsthärtenden Material getränkt, um eine höhere Festigkeit zu erhalten.

Die Hauptvorteile des Binder-Jetting-Verfahrens, nämlich Bauteilgröße, Produktivität und Wirtschaftlichkeit, können gegenüber anderen additiven Fertigungsverfahren bei der Herstellung von Kunststoffmodellen weitgehend nicht ausgeschöpft werden, da die Bauteile zur direkten Verwendung zu porös, nicht fest genug und meist auch nicht stabil genug sind - jedenfalls bei der Verwendung eines Polymerpulvers als Ausgangsmaterial. Dies deshalb, weil mit der Verfestigung des Bauteils eine Schwindung verbunden ist, die zudem durch den schichtweisen Aufbau im Bauteil nicht gleichzeitig, sondern zeitversetzt stattfindet. Zwar könnte durch einen höheren Flüssigkeitseintrag (mehr als die vorstehend genannten 10% des Hohlraumes zwischen den Partikeln des zu bedruckenden Bereichs) die Festigkeit erhöht werden, jedoch leidet dann durch die noch höhere Schwindung die Maßhaltigkeit der Bauteile, weshalb im Stand der Technik auf einen hohen Flüssigkeitseintrag bewusst verzichtet wird. Denn ein noch höherer Eintrag von Bindemittel führt zu einem deutlich längeren Löseprozess bzw. Anlöseprozess zwischen dem Bindemittel und dem Polymerpulver als Ausgangsmaterial. Zudem führt ein größerer Flüssigkeitseintrag zwangsläufig zu einer höheren Migration der Flüssigkeit im Pulverbett, sodass Details an der Oberfläche des herzustellenden Formteils verwaschen oder gar ganz verschwinden können. Ferner kann sich das Bauteil so stark verziehen, dass bereits bei der Herstellung der Prozess gestört wird. Es muss also ein unbefriedigender Kompromiss zwischen der nötigen Maßhaltigkeit und der Festigkeit, die typischerweise eine Zugfestigkeit von 5 MPa nicht überschreiten, des gedruckten Bauteils eingegangen werden.

Nachteilig ist auch, dass die Festigkeit beim Entnehmen der Bauteile noch nicht voll ausgeprägt ist. Um ein Verbiegen oder Brechen des Bauteils zu verhindern, müssen sie daher vorsichtig aus dem 3D-Drucker entnommen werden, was die Möglichkeit einer automatischen Entnahme verhindert oder zumindest erschwert.

Eine nachträgliche Infiltration der Bauteile führt zwar zu besseren Festigkeiten des Endprodukts, sie ist jedoch mit einem hohen Nachbehandlungsaufwand, häufig in Handarbeit, verbunden, was die Wirtschaftlichkeit des Verfahrens begrenzt.

Auch die hohe Porosität des Bauteils selbst ist nachtteilig, da das Bauteil dadurch schmutzanfällig ist und Flüssigkeiten leicht ungewollt eindringen können.

Da der Löseprozess bzw. Anlöseprozess zwischen dem Bindemittel und dem Polymerpulver als Ausgangsmaterial nicht unmittelbar nach dem Aufbringen des Bindemittels auf eine Pulverschicht einsetzt, sondern deutlich verzögert einsetzt, kann das Gewicht darüberliegender Pulverschichten zu einer Verformung, insbesondere Stauchung darunterliegender Pulverschichten führen, sodass die Geometrie des erzeugten Bauteils unter Umständen erheblich von der Sollgeometrie abweicht.

### Aufgabe der Erfindung

Der Erfindung liegt die Aufgabe zugrunde, das aus dem Stand der Technik bekannte Binder-Jetting-Verfahren so zu verbessern, dass Formteile mit einer deutlich höheren Festigkeit bei gleichzeitig hoher Maßhaltigkeit bzw. reduzierter Schwindung hergestellt werden können.

### Erfindungsgemäße Lösung

Diese Aufgabe wird erfindungsgemäß mit einem Verfahren nach dem unabhängigen Patentanspruch gelöst. Vorteilhafte Ausgestaltungen der Erfindung sind in den abhängigen Patentansprüchen angegeben.

Dadurch, dass das Ausgangsmaterial auf die vorbestimmte erste Temperatur erwärmt wird, wird einerseits der Löseprozess (Lösen bzw. Anlösen der Partikel durch das aufgebrachte Bindemittel) deutlich beschleunigt, sodass nach Abschluss des Aufbaus einer Schicht der Lösevorgang bereits weitgehend abgeschlossen ist. Andererseits wird durch den beschleunigten Löseprozess auch die Erhöhung der Viskosität des Bindemittels deutlich beschleunigt, wodurch die Migration des Bindemittels in benachbarte Bereiche derart stark reduziert wird, dass nahezu keine Migration stattfindet, mit der Folge, dass die Oberfläche der herzustellenden Formteile deutlich glatter wird und auch kleinste Strukturen scharf ausgebildet werden.

Ferner hat sich gezeigt, dass bei Verwendung eines polymerisierbaren Binders der gelöste Anteil der Partikel eine Polymerisation des Binders in Gang setzt, die die Viskosität noch weiter erhöht, aber noch nicht zwingend die Endfestigkeit der Formteile herstellt. Diese Vorteile, die sich durch das Erwärmen des Ausgangsmaterial ergeben, ermöglichen, dass deutlich mehr Bindemittel aufgebracht werden kann, als die im Stand der Technik möglichen und oben genannten 10%, wodurch die Festigkeit des herzustellenden Formteils deutlich erhöht werden kann. Ferner wird der Verzug des Formteils erheblich reduziert, da der Löseprozess deutlich früher in Gang gesetzt und abgeschlossen wird - die Gefahr, dass darüber liegende Schichten darunterliegende Schichten aufgrund ihres Gewichtes stauchen bzw. verformen kann so deutlich reduziert werden.

Das Erwärmen des Ausgangsmaterials kann mit Heizelementen durchgeführt werden, beispielsweise mit Infrarot-Strahlern, heißer Luft oder Heizmatten am oder im Bauraum.

Vorteilhaft ist es, wenn das Ausgangsmaterial vor dem Aufbringen des Bindemittels auf die Partikelschicht auf die vorbestimmte erste Temperatur erwärmt wird.

Vorteilhaft kann es sein, wenn das Ausgangsmaterial
- beim Einbringen in den Bauraum, oder
- nach dem Einbringen in den Bauraum, oder
- vor dem Einbringen in den Bauraum
auf die vorbestimmte erste Temperatur erwärmt wird.

In einer Ausgestaltung der Erfindung kann es vorteilhaft sein, wenn die Partikelschicht selektiv an jenen Bereichen auf die vorbestimmte erste Temperatur erwärmt wird, an denen im nachfolgenden (zweiten) Schritt das Bindemittel aufgebracht wird.

Durch das selektive Erwärmen der Partikelschicht kann einerseits Energie und Zeit beim Herstellen des Formteils gespart werden. Andererseits kann dadurch besser gewährleistet werden, dass Partikel, die das herzustellende Formteil umgeben, aufgrund ihrer Erwärmung nicht an dem herzustellenden Formteil haften bleiben.

Die vorbestimmte erste Temperatur wird so gewählt, dass sie unterhalb der Schmelztemperatur des Ausgangsmaterials liegt.

Geeignete Temperaturbereiche sind 40°C bis 150°C, bevorzugt 60°C bis 120°C, besonders bevorzugt 80°C bis 90°C.

In einer Ausgestaltung der Erfindung kann es vorteilhaft sein die Partikelschicht an jenen Bereichen zumindest abschnittsweise auf eine vorbestimmte dritte Temperatur zu erwärmen, an denen im nachfolgenden Schritt kein Bindemittel aufgebracht wird. Die dritte Temperatur kann hier so gewählt werden, dass die Oberfläche der Partikel in diesen Abschnitten kurzeitig leicht anschmilzt, sodass die Partikel in diesen Bereichen aneinanderhaften. Durch das lediglich leichte Anschmelzen werden Partikelbereiche außerhalb des Formteils stabilisiert, sodass ein Zusammenfallen bzw. ein Kollaps der nicht zum Formteil gehörenden Partikelbereiche verhindert wird. Gleichzeitig ist durch das lediglich leichte Anschmelzen dieser Partikel gewährleistet, dass das Formteil nach der Herstellung einfach von diesen Partikeln befreit werden kann.

In dem zweiten Schritt kann so viel Bindemittel selektiv auf die Partikelschicht aufgebracht werden, dass in dem selektierten Bereich mindestens 30%, vorzugsweise mindestens 50%, besonders bevorzugt mindestens 70% des Hohlraumes zwischen den Partikeln mit dem Bindemittel ausgefüllt wird.

Der selektierte Bereich ist hierbei jener Bereich der Partikelschicht, der zum herzustellenden Formteil gehört.

Zusätzlich kann auch auf jenem Bereich das Bindemittel aufgebracht werden, der nicht zum herzustellenden Formteil gehört. Hier wird allerdings nur so viel Bindemittel aufgebracht maximal 30%, vorzugsweise maximal 15%, besonders bevorzugt maximal 5% des Hohlraumes zwischen den Partikeln mit dem Bindemittel ausgefüllt wird. Dadurch können Partikelbereiche außerhalb des Formteils noch besser stabilisiert werden, um ein Zusammenfallen bzw. einen Kollaps der nicht zum Formteil gehörenden Partikelbereiche noch besser zu verhindern. Gleichzeitig ist dennoch gewährleistet, dass das Formteil nach der Herstellung einfach von diesen Partikeln befreit werden kann.

Vorteilhaft ist es, wenn das Bindemittel
- vor dem Aufbringen,
- beim Aufbringen oder
- nach dem Aufbringen
auf die Partikelschicht auf eine zweite Temperatur erwärmt wird.

Durch das Aufbringen eines erwärmten Bindemittels oder durch das Erwärmen des aufgebrachten Bindemittels kann der Löseprozess zusätzlich unterstützt werden. Die Viskosität des Bindemittel-Polymerpulver-Gemischs kann zudem noch weiter und noch schneller erhöht werden.

Geeignete Temperaturbereiche für die zweite Temperatur sind 40°C bis 150°C, bevorzugt 50°C bis 120°C, besonders bevorzugt 60°C bis 90°C.

Als Bindemittel wird ein das Polymerpulver lösendes Lösungsmittel verwendet.

Als Bindemittel wird ein polymerisierbares Lösungsmittel verwendet. Unter polymerisierbares Lösungsmittel ist auch teilweise polymerisierbares Lösungsmittel zu verstehen, etwa Lösungsmittel, die nicht polymerisierbare Bestandteile aufweisen.

Gemäß einer besonders vorteilhaften Ausführungsform des erfindungsgemäßen Verfahrens wird als polymerisierbares Lösungsmittel ein Acrylat oder Methacrylat, insbesondere 2- Hydroxyethylmetacrylat verwendet. Weitere vorteilhafte Bindemittel sind Styrol, Methylstyrol, Butylmethacrylat, Isobornylacrylat oder Isobornylmethacrylat, wobei die Erfindung nicht auf diese Bindemittel beschränkt ist. Viele monomere Flüssigkeiten weisen geeignete Eigenschaften aus, die mit dem Druckkopf des 3D-Druckers verarbeitet werden können. Besonders vorteilhaft ist es dabei, dass die Polymerisation in einer typischen Raum-Atmosphäre stattfinden kann. Erfindungsgemäß können daher auch Monomere als Bindemittel verwendet werden, die vernetzend wirken und während der Herstellung des Formteils ein Duroplast, ein Elastomer oder ein Polyurethan entstehen lassen.

In einer Ausgestaltung der Erfindung können zur Herstellung eines Formteils unterschiedliche Bindemittel verwendet werden, die auf jeweils verschiedene Bereiche der Partikelschicht aufgebracht werden können. Dadurch können Formteile hergestellt werden, die starre Abschnitte und elastische Abschnitte aufweisen. Für das jeweilige Bindemittel können separate Druckköpfe verwendet werden.

Das Polymerpulver kann langkettige Polymere aufweisen.

Um ein Formteil mit möglichst homogenem Material zu erhalten, ist es vorteilhaft als Bindemittel ein dem Ausgangsmaterial ähnliches chemisches Material zu verwenden. Dies hat den Vorteil, dass sich das Bindemittel und die Partikel des Ausgangsmaterials besonders gut ineinander lösen. Bei Verwendung von langkettigen Polymeren, welche ein Molekulargewicht von mindestens 10.000 g/mol, bevorzugt mindestens 100.000 g/mol, besonders bevorzugt mindestens 1.000.000 g/mol aufweisen, als Ausgangsmaterial, kann die Viskosität des Bindemittel-Partikel-Gemisches besonders gut erhöht werden, sodass auch mehr Bindemittel auf die Partikelschicht aufgebracht werden kann, ohne dass das Bindemittel in die Umgebung migriert.

In einer Ausgestaltung der Erfindung kann es vorteilhaft sind, in den Partikelbereichen, die nicht zum herzustellenden Formteil gehören, Stützstrukturen herzustellen, um die nicht zum herzustellenden Formteil gehören Partikelbereiche weiter zu stabilisieren. Vorteilhaft ist es hierbei, wenn diese Stützstrukturen beabstandet zum Formteil hergestellt werden, das Formteil also nicht berühren.

Vorteilhaft ist es, wenn das Polymerpulver kugelförmige Partikel aufweist, wobei der Durchmesser der Partikel vorzugsweise der Druckauflösung der Vorrichtung zum Herstellen des dreidimensionalen Formteils entspricht.

Durch die Verwendung von kugelförmigen Partikeln des Ausgangsmaterials wird eine optimale Packung, welche sich im Bereich zwischen 50% und 70% befindet, gewährleistet, wodurch eine Schwindung des herzustellenden Formteils reduziert oder gar vermieden werden kann. Mit "Packung" ist in diesem Zusammenhang die Belegung der Partikel im Volumen gemeint, sodass eine Erhöhung der Packung zu einer Verringerung der Porosität führt. Versuche haben zudem gezeigt, dass mit einem mittleren Partikeldurchmesser, der etwa einem halben Auflösungsschritt des 3D-Druckers entspricht, bzw. bevorzugt mit einem maximalen Partikeldurchmesser, der etwa der Druckauflösung des 3D-Druckers entspricht, ein optimales Verhältnis zwischen Partikeldurchmesser und gelöster bzw. angelöster Schale (Oberfläche) der Partikel erzielt wird. Die Druckauflösung wird typischerweise von der eingestellten Schichtstärke bestimmt, die typischerweise im Bereich zwischen 50µm und 200µm liegt. Das so erreichte Verhältnis zwischen Partikeldurchmesser und gelöster bzw. angelöster Schale der Partikel hat einerseits den Vorteil, dass Auswirkungen auf die Schwindung des herzustellenden Formteils nicht messbar sind bzw. auf ein verträgliches Maß reduziert werden. Andererseits wird die effektive Auflösung des 3D-Druckers dadurch nicht negativ beeinflusst. Beispielsweise ist für eine eingestellte Schichtstärke von 150µm ein mittlerer Partikeldurchmesser von 75µm ideal, bzw. bevorzugt ein maximaler Partikeldurchmesser von 150µm.

In einer Ausgestaltung der Erfindung kann der Bauraum während des Herstellens des dreidimensionalen Formteils von unten und/oder von den Seiten her gekühlt oder erwärmt werden.

Es hat sich gezeigt, dass durch ein Kühlen des Bauraumes von unten (während die im Bauraum oben aufgebrachte Partikelschicht erwärmt wird), der Lösevorgang der bereits fertig aufgebauten Schichten des herzustellenden Formteils zusätzlich verzögert werden kann und sich dadurch Abweichungen von der Sollgeometrie in z-Richtung (Aufbaurichtung) weiter reduzieren lassen. Optional oder zusätzlich ist auch ein seitliches Kühlen von den Bauraumwänden her möglich.

In einer noch weiteren Ausgestaltung der Erfindung kann der Bauraum während des Herstellens des dreidimensionalen Formteils von unten her erwärmt werden, indem ein heißes Gas über den Boden dem Bauraum zugeführt wird, wobei das heiße Gas mit einem vorbestimmten Druck dem Bauraum zugeführt wird, wobei der vorbestimmte Druck derart gewählt wird, dass das zugeführte heiße Gas mit einer vorbestimmten Geschwindigkeit von unten nach oben durch die Partikelschichten gedrückt wird.

Während der Herstellung eines Formteils (die je nach Größe und Komplexität des Formteils bis zu mehreren Tagen dauern kann) durchwandert das Formteil zeitlich verschiedene Phasen. Während das Formteil bzw. einzelne Schichten noch nicht polymerisiert wurden, schwindet es durch das Erweichen und Zusammenstauchen des Pulvers. Es ist daher wünschenswert diese Phase kurz und vor allem gleichmäßig für alle Schichten zu gestalten. Erreicht wird dies mit dem heißen Gas, das während des Herstellens des Formteils von unten nach oben durch die Partikelschichten gedrückt wird.

Das heiße Gas wird hierbei durch jene Bereiche der Partikelschichten gedrückt, die nicht zum herzustellenden Formteil gehören und in denen daher kein Bindemittel eingebracht wurde. Diese Partikel dieser Bereiche werden durch das hindurchgedrückte heiße Gas erwärmt. Vorteilhaft ist hierbei, dass das herzustellende Formteil einerseits durch das heiße Gas und andererseits durch die das Formteil umgebenden aufgewärmten Partikel ebenfalls erwärmt wird, da sowohl durch das heiße Gas als auch durch die aufgewärmten Partikel ein Wärmeeintrag in das Formteil bewirkt wird. Es hat sich überraschender Weise gezeigt, dass durch diesen Wärmeeintrag die Polymerisation des Bindemittels früher und vor allem im gesamten Formteil gleichmäßig in Gang gesetzt wird und zudem schneller abläuft. Durch das frühere Starten und das schnellere Ablaufen der Polymerisation kann einem Verzug, insbesondere einem Stauchen des Formteils während der Herstellung effektiv entgegengewirkt werden, da das Formteil deutlich schneller eine vorbestimmte Festigkeit erreicht.

Ein weiterer Vorteil der genannten Verwendung eines heißen Gases besteht darin, dass der gesamte Herstellungsvorgang deutlich beschleunigt werden kann, da einzelne Schichten deutlich schneller aufgebaut werden können, ohne dass es zu einer Stauchung darunterliegender Schichten kommt.

Ein noch weiterer Vorteil der genannten Verwendung eines heißen Gases besteht darin, dass der Anteil an Bindemittelresten deutlich reduziert wird, was die Herstellung deutlich stabilere Formteile ermöglicht.

Vorteilhaft ist es, wenn die Temperatur des Gases so gewählt wird, dass sie oberhalb der Zerfallstemperatur des in den Partikeln enthaltenen Initiators liegt.

Weiter kann es vorteilhaft sein, wenn als Gas ein inertes Gas, insbesondere Stickstoff bzw. molekularer Stickstoff verwendet wird. Dadurch kann die Sauerstoffinhibierung, welche die Polymerisation behindert würde, unterdrücken.

In einer weiteren Ausgestaltung der Erfindung kann es vorgesehen sein, den Bauraum von unten her zu kühlen, indem ein kaltes Gas über den Boden dem Bauraum zugeführt wird, wobei das kalte Gas mit einem vorbestimmten Druck dem Bauraum zugeführt wird, wobei der vorbestimmte Druck derart gewählt wird, dass das zugeführte kalte Gas mit einer vorbestimmten Geschwindigkeit von unten nach oben durch die Partikelschichten gedrückt wird.

Vorteilhaft ist es hierbei, wenn das kalte Gas im Anschluss an die Herstellung des Formteils dem Bauraum zugeführt wird. Beim Durchdrücken von kaltem Gas findet ein Kälteeintrag in das Formteil statt, sodass das Formteil deutlich schneller auf eine Temperatur abgekühlt werden kann, bei der ein sicheres Entnehmen des Formteils aus dem Bauraum gewährleistet werden kann.

Das Bindemittel kann einen Katalysator aufweisen, mit dem eine Polymerisation des Bindemittels, insbesondere nach dem Aufbringen auf die Partikelschicht, in Gang gesetzt wird.

### Kurzbeschreibung der Figuren

Weitere Einzelheiten und Merkmale der Erfindung ergeben sich aus den Ansprüchen und der nachfolgenden Beschreibung in Verbindung mit der Zeichnung. Es zeigt:
- Fig. 1: einen aus dem Stand der Technik bekannten 3D-Drucker für das Binder-Jetting-Verfahren während des Prozessschrittes "Ausgangsmaterial auflegen";
- Fig. 2: den in Fig. 1 gezeigten 3D-Drucker während des Prozessschrittes "Binder drucken";
- Fig. 3: einen Ausschnitt mehrerer Partikelschichten, die mit einem aus dem Stand der Technik bekannten Binder-Jetting-Verfahren aufgebaut wurden;
- Fig. 4: einen Ausschnitt mehrerer Partikelschichten, die mit einem aus dem Stand der Technik bekannten Binder-Jetting-Verfahren aufgebaut wurden, wobei zu viel Bindemittel verwendet wurde;
- Fig. 5: einen Ausschnitt mehrerer Partikelschichten, die mit einem erfindungsgemäßen Binder-Jetting-Verfahren aufgebaut wurden;
- Fig. 6: die Änderung der Viskosität des Bindemittels bei einem erfindungsgemäßen Verfahren und bei einem aus dem Stand der Technik bekannten Verfahren, und
- Fig. 7: ein sich im Aufbau befindliches Formteil, wobei dem Bauraum ein heißes Gas zugeführt wird.

### Detaillierte Beschreibung der Erfindung

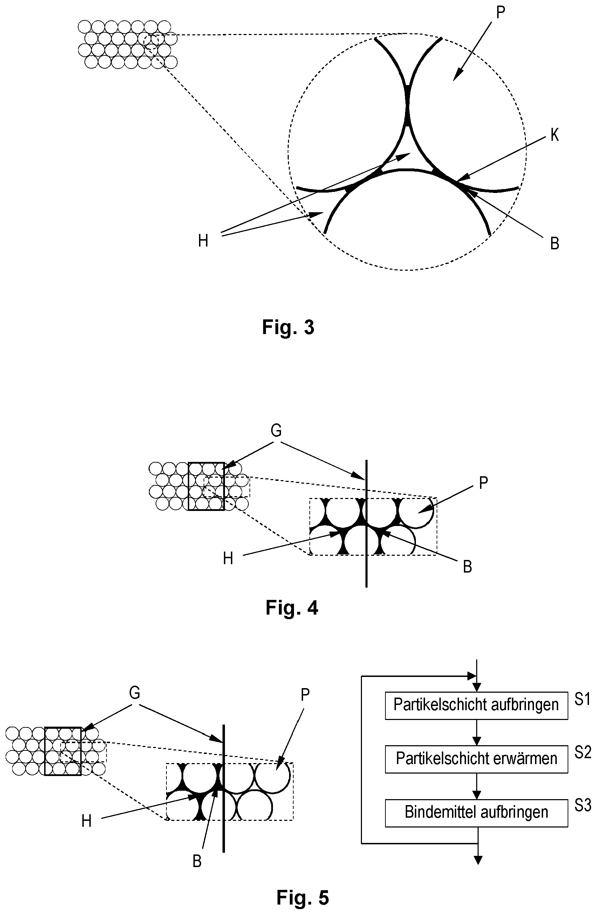

Fig. 3 zeigt eine Schicht bestehend aus mehreren Kunststoffpartikeln P (Kunststoffkugeln), die gemäß einem aus dem Stand der Technik bekannten Binder-Jetting-Verfahren aufgebaut wurde. Ein Ausschnitt der Schicht ist vergrößert dargestellt. Wie oben bereits erwähnt, wird im Stand der Technik auf einen hohen Eintrag an Bindemittel bewusst verzichtet, da es ansonsten zu einer nicht gewollten Migration von Bindemittel in benachbarte Bereiche kommt. Es wird gerade so viel Bindemittel B eingetragen, dass die Kunststoffpartikel P an den Kontaktstellen K mit dem Bindemittel benetzt sind, sodass die Kunststoffpartikel P an den Kontaktstellen K aneinanderhaften. Die Hohlräume H zwischen den Kunststoffpartikeln P bleiben leer bzw. sind nach dem Aufbau des Objektes mit Luft gefüllt. Das so hergestellte Formteil weist daher eine hohe Porosität und eine geringe Festigkeit auf.

Fig. 4 zeigt demgegenüber eine Schicht bestehend aus mehreren Kunststoffpartikeln P (Kunststoffkugeln), die ebenfalls gemäß einem aus dem Stand der Technik bekannten Binder-Jetting-Verfahren aufgebaut wurde, bei der aber eine größere Menge an Bindemittel eingebracht wurde. Im Unterschied zu dem in Fig. 3 gezeigten Szenario sind die Hohlräume H zwischen den Partikeln P des herzustellenden Formteils weitgehend mit dem Bindemittel ausgefüllt. Mit dem erhöhten Bindemitteleintrag geht bei dem aus dem Stand der Technik bekannten Verfahren allerdings der Nachteil einher, dass das Bindemittel auch in Bereiche bzw. Hohlräume migriert, die zum Teil deutlich außerhalb der Grenzfläche G des herzustellenden Formteils liegen. Dies führt zu rauen Oberflächen an dem hergestellten Formteil. Kleine Strukturen des Formteils verschwimmen oder sind gar nicht mehr als solche sichtbar.

Fig. 5 zeigt nun eine Schicht, bestehend aus mehreren Kunststoffpartikeln P (Kunststoffkugeln), die gemäß dem erfindungsgemäß weiterentwickelten Binder-Jetting-Verfahren aufgebaut wurde, und bei der eine große Menge an Bindemittel eingebracht wurde. Der Aufbau bzw. das Drucken des Formteils erfolgt wie in dem ebenfalls in Fig. 5 gezeigten Ablaufdiagramm (nach der unten beschriebenen Variante) des erfindungsgemäßen Verfahrens.

In dem Schritt S1 wird ein Ausgangsmaterial, vorzugsweise kugelförmige Partikel aus einem Polymer, als Partikelschicht in den Bauraum eingebracht. Zu Beginn des Druckvorganges wird eine erste Partikelschicht direkt auf die Plattform des Druckers aufgebracht. Im weiteren Verlauf des Druckprozesses wird dann eine Partikelschicht auf die bereits vorhandene und verarbeitete Partikelschicht aufgebracht.

Erfindungsgemäß kann das Ausgangsmaterial vor, nach oder beim Einbringen in den Bauraum erwärmt werden. Nachfolgend wird eine Variante beschrieben, bei der das Ausgangsmaterial nach dem Einbringen in den Bauraum als Partikelschicht erwärmt wird.

Nach dem Einbringen des Ausgangsmaterials als Partikelschicht ist es erfindungsgemäß vorgesehen, diese zu erwärmen (Schritt S2), bevor in dem Schritt S3 das Bindemittel an vorbestimmten Bereichen der Partikelschicht auf die Partikelschicht aufgebracht wird. Das Erwärmen kann beispielsweise mittels einer Infrarot-Lampe oder mittels heißer Luft / Gas erfolgen.

In einer Ausgestaltung der Erfindung kann es vorgesehen sein, in dem Schritt S2 nur jene Bereiche der Partikelschicht zu erwärmen, in denen im anschließenden Schritt S3 das Bindemittel aufgebracht wird (selektives Erwärmen).

Die Temperatur zum Erwärmen der Partikelschicht ist in jedem Fall so zu wählen, dass die Partikel nicht schmelzen.

In einer Ausgestaltung der Erfindung kann es aber vorteilhaft sein, die Temperatur zum Erwärmen der Partikelschicht so zu wählen, dass die Partikel leicht angesintert werden, wodurch sich die Partikel miteinander verbinden und sich die bereits verarbeiteten Partikelschichten in sich stabilisieren. Ein In-Sich-Zusammenfallen während des Druckvorgangs kann so vermieden werden.

Nach dem Erwärmen der Partikelschicht wird in dem Schritt S3 das Bindemittel an jenen Bereichen der Partikelschicht aufgebracht, an denen der herzustellende Formkörper ausgebildet werden soll. Erfindungsgemäß ist es vorgesehen, dass soviel Bindemittel aufgebracht wird, dass mindestens 30%, vorzugsweise mindestens 50%, besonders bevorzugt mindestens 70% der Hohlräume zwischen den Partikeln, die den Formkörper bilden sollen, mit Bindemittel ausgefüllt wird. Besonders vorteilhaft ist es hierbei, wenn das Bindemittel, vorzugsweise vor dem Auftragen, erwärmt wird. Beispielsweise wird für ein Bauteil mit einem Volumen von 1cm³ bereits 0,6cm³ durch die Partikel des Ausgangsmaterials belegt. Der verbleibende Hohlraum von 0,4cm³ wird durch den Binder beispielsweise zu 70% belegt, was 0,28cm³ entspricht. Die verbleibenden 0,12cm³ bleiben ungefüllt. In diesem Beispiel werden bei einer Schichtdicke von 150µm und einer zu bedruckenden Fläche von 1cm² die Bindermenge von 42µl aufgebracht.

Die genannten Schritte werden solange wiederholt, bis das Formteil vollständig aufgebaut wurde.

Die vollständige Aushärtung der Bauteile wird vor der Entnahme dieser im Bauraum typischerweise thermisch erreicht. Entweder wird nach Abschluss des Druckvorgangs der gesamte Bauraum in einer Wärmekammer bis zur abgeschlossenen Härtung erhitzt, oder der Bauraum wird nach Abschluss des Druckvorgangs schon im Drucker durch z.B. am Bauraum angebrachte Wärmematten erhitzt, oder der Bauraum wird bereits während des Druckvorgangs auf Aushärtungstemperatur gehalten. Auch ein sukzessives Zuschalten von Heizelementen an den Bauraumwänden unterhalb der aktuellen Bauebene ist denkbar.

Die Verwendung derart großer Mengen an Bindemittel und das vorherige Erwärmen der Partikelschicht lässt zunächst vermuten, dass
- das Bindemittel aufgrund der Temperatur der Partikelschicht an Viskosität verliert und daher noch stärker in benachbarte Bereiche migriert, wie es ohnehin bereits bei niedrigen Temperaturen der Partikelschicht der Fall ist,
- die Partikel in so einem Maße gelöst werden, dass sich ein Verzug und eine hohe Schwindung des herzustellenden Formteils einstellt,
- bei Verwendung von Monomer-Flüssigkeiten als Bindemittel eine übermäßige Polymerisation ausgelöst wird, durch die die Temperatur noch weiter erhöht wird, die zu einer noch größeren Schwindung führt.

Versuche haben aber überraschender Weise gezeigt, dass dies nicht der Fall ist.

Denn es wurde gefunden, dass durch die hohe Temperatur der Partikelschicht der Löseprozess zwischen Partikel und Bindemittel beschleunigt wird, was dazu führt, dass entgegen der vorstehend genannten Vermutung einerseits die Viskosität des Bindemittels zeitlich steil ansteigt und andererseits der gesamte Löseprozess verkürzt wird. Durch die schnelle Erhöhung der Viskosität des Bindemittels wird die Migration in benachbarte Bereiche nahezu vollständig verhindert. Zudem wurde festgestellt, dass der Lösevorgang in der Aufbauzeit einer Schicht nahezu abgeschlossen ist, d.h. er setzt sich in einer Schicht nicht mehr fort - jedenfalls nicht mehr so fort, dass die Maßhaltigkeit des Formteils beeinträchtigt wird, wenn bereits weitere Schichten aufgebaut werden - ein Verzug, insbesondere in Baurichtung (z-Achse) wird so deutlich reduziert.

Aufgrund der zeitlich schnell ansteigenden Viskosität des Bindemittels wird verhindert, dass das Bindemittel auch in Bereiche bzw. Hohlräume migriert, die außerhalb der Grenzfläche G des herzustellenden Formteils liegen, wie in Fig. 5 ersichtlich ist.

Bei dem erfindungsgemäßen Verfahren ist es vorteilhaft das Ausgangsmaterial so zu wählen, dass deren Polymer aus langen Ketten besteht, sodass sich die Viskosität des Bindemittels auch bei geringem Anlösen der Partikel möglichst stark erhöht. Des Weiteren ist ein Ausgangsmaterial von Vorteil, das eine gute Packung ausbildet - kugelförmige Partikel haben sich hierzu als besonders gut geeignet herausgestellt, sie erreichen eine Raumfüllung von 50% bis 70%. Denn kugelförmige Partikel sorgen für eine minimale Schwindung. Die Partikelgröße darf nicht zu klein sein, da sonst das Verhältnis von gelöster Schale (der Partikel) zum Kugeldurchmesser zu groß ist und sich damit negativ auf die Schwindung auswirkt.

Die erhöhte Temperatur kann bei Monomer-Flüssigkeiten als Bindemittel eine Polymerisation anstoßen, wodurch die Viskosität des Bindemittels zusätzlich erhöht werden kann.

Während des Druckvorganges kann der Bauraum von unten und/oder von den Seiten her gekühlt werden (während die im Bauraum oben aufgebrachte Partikelschicht erwärmt wird). Durch die so erzielte Verzögerung des Lösevorgangs werden fertig aufgebaute Schichten quasi "eingefroren".

Durch das Erwärmen der aufgebrachten Partikelschicht vor dem Aufbringen des Bindemittels wird also erfindungsgemäß Folgendes erreicht:
- Der Lösevorgang zwischen Bindemittel und Partikel wird beschleunigt,
- wodurch ein zeitlich steilerer Viskositätsanstieg erreicht wird,
- und sich dadurch die Migration deutlich verringert.
- Eine Polymerisation bei Monomer-Flüssigkeiten als Bindemittel wird ausgelöst, was die Viskosität zusätzlich erhöht.
- Der Lösevorgang zwischen Bindemittel und Partikel wird schneller abgeschlossen, d.h. der Lösevorgang wird schneller derart verlangsamt, dass er keine Auswirkung mehr auf die Maßhaltigkeit des herzustellenden Formteils hat.
- Die Sollgeometrie des herzustellenden Bauteils wird besser eingehalten.
- Das Formteil weist eine deutlich höhere Stabilität auf, auch weil deutlich mehr Bindemittel eingetragen wird.

Mit dem erfindungsgemäßen Verfahren ergeben sich zudem insbesondere folgende Vorteile:
- Die Bauteil-Oberfläche wird deutlich glatter - sie wird nur noch durch die Pulverkörnung und die Auflösung des 3D-Druckers bestimmt.
- Details des Formteils werden deutlich schärfer gedruckt. Kleinste Strukturen an der Oberfläche des Formteils werden scharf abgebildet.
- Die Selektivität steigt deutlich und dünne Wände werden fester.
- Das Reinigen der Formteile wird einfacher, da das Ausdampfen der Binder-Flüssigkeit in der Pulver-Umgebung verringert wird. Lange und dünne Kanäle können von unbedrucktem Pulver befreit werden.
- Es kann deutlich mehr Bindemittel verwendet werden als im Stand der Technik.

Dadurch wird die Festigkeit des Formteils deutlich erhöht.
- Die Migration des Bindemittels in das benachbarte Pulver wird vermieden.
- Der Formverlust des Formteils aufgrund eines zu weichen Bindemittel-PulverGemisches wird vermieden.
- Ein Stauchen des Formteils in Baurichtung (z-Achse) während des Aufbaus durch einen langen Löseprozess wird vermieden, wodurch eine sehr gute Maßgenauigkeit in Baurichtung erreicht wird.
- Dem Curling-Effekt, der beim Herstellen von Kunststoffformteilen im Binder-Jetting-Verfahren häufig vorkommt, kann effektiv entgegengewirkt werden.

Das Erwärmen der aufgebrachten Partikelschicht kann beispielsweise mittels Infrarot-Strahlung, zugeführter warmen/heißer Luft/Gas oder aber auch mittels eines erwärmbaren Beschichters, der das Material aufträgt, erfolgen.

Ein selektives Erwärmen der Partikelschicht kann etwa mit Hilfe des Druckkopfes 3 erfolgen, der so ausgestaltet ist, dass er vor Auftragen des Bindemittels die entsprechenden Bereiche erwärmt, etwa mittels IR-Strahlen. Alternativ kann auch eine Art Heizkopf vorgesehen werden, der die Partikelschicht abfährt und diese selektiv erwärmt.

In einer weiteren Ausgestaltung der Erfindung kann ein selektives Erwärmen der Partikelschicht auch mit einer Wärmeeinrichtung, etwa ein IR-Strahler, erfolgen, die am Pulverbeschichter 2 angeordnet ist, sodass die von dem Pulverbeschichter aufgebrachte Partikelschicht unmittelbar nach dem Aufbringen selektiv erwärmt wird. Um ein Abkühlen direkt nach dem Erwärmen weitgehend zu verhindern, kann es vorteilhaft sein, eine weitere Wärmeeinrichtung, etwa ein weiterer IR-Strahler, vorzusehen, die oberhalb des Baufeldes angeordnet ist. Bei der weiteren Wärmeeinrichtung kann es sich auch um eine Einrichtung handeln, mit der warme/heiße Luft/Gas dem Bauraum zugeführt wird.

Vorteilhaft kann es zudem sein, wenn das Bindemittel vor oder während des Aufbringens auf die Partikelschicht erwärmt wird. Dies kann etwa mittels eines beheizbaren Druckkopfes erfolgen, oder ein erwärmtes Bindemittel kann dem Druckkopf zugeführt werden.

Werden beispielsweise Methacrylate als Bindemittel verwendet, eignet sich Polymethylmetacrylat-Pulver als Ausgangsmaterial besonders gut, das zudem aufgrund seiner Herstellungsform besonders fließfähig ist, eine hohe Schüttdichte ausbildet und so für den 3D-Druck gut geeignet ist.

Beispiele:

| | Beispiel 1 | Beispiel 2 | Beispiel 3 |
|---|---|---|---|
| Ausgangsmaterial | Polystyrol | Polymethylmethacrylat | Polystyrol |
| Pulvergröße | 40 bis 100 µm | 60 bis 100 µm | 40 bis 80 µm |
| Bindemittel | Styrol | Methylstyrol | Methylstyrol |
| Temperatur des Ausgangsmaterials | ca. 90°C | ca. 80°C | ca. 100°C |
| Temperatur des Bindemittels | ca. 50°C | ca. 70°C | ca. 80°C |

In allen drei Beispielen konnten Formteile gemäß der vorliegenden Erfindung hergestellt werden, die gegenüber Formteilen, die nach dem aus dem Stand der Technik bekannten Binder-Jetting-Verfahren hergestellt wurden, eine deutlich höhere Festigkeit und eine deutlich geringere Schwindung aufwiesen. Zudem blieben filigrane Oberflächenstrukturen deutlich sichtbar erhalten.

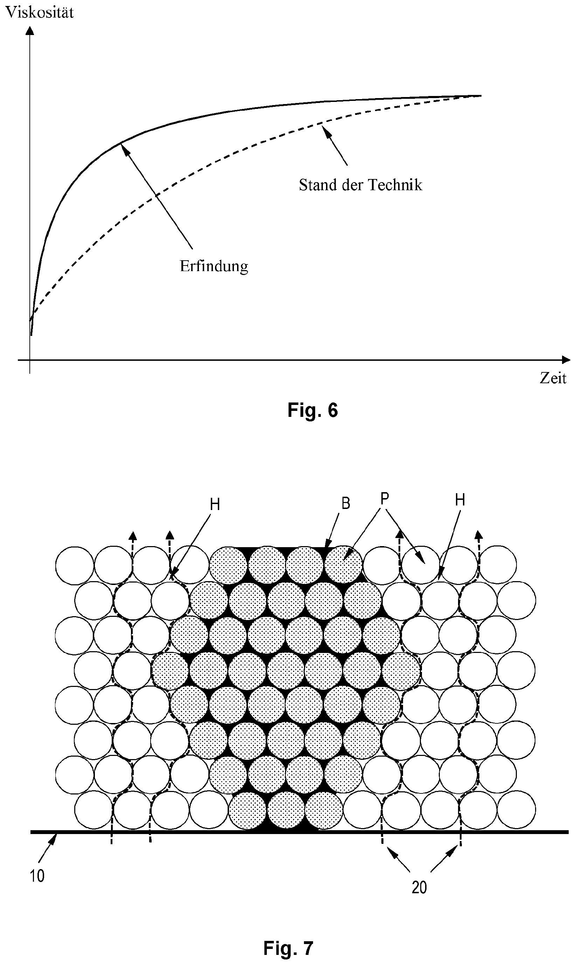

Fig. 6 zeigt die Änderung der Viskosität des Bindemittels bei einem erfindungsgemäßen Verfahren und bei einem aus dem Stand der Technik bekannten Verfahren. Deutlich erkennbar ist hierbei, dass die Viskosität des Bindemittels bei dem erfindungsgemäßen Verfahren deutlich schneller zunimmt als bei einem Binder-Jetting-Verfahren nach dem Stand der Technik. Dies führt dazu, dass auch bei großen Mengen an eingebrachten Bindemittel eine Migration des Bindemittels in benachbarte Bereiche des Pulverbetts nahezu vollständig verhindert wird.

**Fig. 7** zeigt einen Ausschnitt eines Bauraumes mit mehreren Partikelschichten, in denen das Formteil hergestellt wurde. Das Formteil wird in den Partikelschichten durch jene Partikel P gebildet, zwischen denen die Hohlräume H mit einem Bindemittel B ausgefüllt wurden. In Fig. 7 sind die zum Formteil gehörigen Partikel mit Punkten ausgefüllt.

Gemäß eines Aspekts der Erfindung kann es nun vorgesehen sein den Bauraum während des Herstellens des dreidimensionalen Formteils von unten her zu erwärmen, indem ein heißes Gas 20 über den Boden 10 dem Bauraum zugeführt wird.

Das heiße Gas wird hierbei mit einem vorbestimmten Druck dem Bauraum zugeführt wird. Der vorbestimmte Druck wird so gewählt wird, dass das zugeführte heiße Gas mit einer vorbestimmten Geschwindigkeit von unten nach oben durch die Partikelschichten gedrückt wird.

Das heiße Gas kann hierbei Stickstoff umfassen.

Das Gas wird bedingt durch den Überdruck, mit dem das Gas von unten dem Bauraum zugeführt wird, durch jene Bereiche der Partikelschichten gedrückt bzw. geleitet, die nicht zum herzustellenden (bzw. nicht zum bereits hergestellt Teil) Formteil gehören und in denen daher kein Bindemittel eingebracht wurde. In Fig. 7 sind beispielhaft vier Gasströme gezeigt, die von unten nach oben durch die Partikelschicht gedrückt bzw. geleitet werden. Erfindungsgemäß ist es aber vorgesehen, dass so viel heißes Gas von unten dem Bauraum zugeführt wird, dass alle nicht mit einem Bindemittel ausgefüllten Hohlräume H mit dem heißen Gas durchströmt werden - dadurch ist gewährleistet, dass alle dort angeordneten Partikel weitestgehend gleich erwärmt werden.

Durch das durch die Partikelschicht von unten nach oben durchströmende heiße Gas werden die nicht zum Formteil gehörenden Partikel erwärmt. Mit dem heißen Gas wird zudem das herzustellende Formteil erwärmt, obwohl durch die zu dem Formteil gehörenden Partikel kein Gas durchgeleitet wird bzw. durchströmt.

Denn das durch die nicht zum Formteil gehörenden Partikel strömende heiße Gas einerseits und durch die das Formteil umgebenden aufgewärmten Partikel andererseits geben genügend Wärmeenergie ab, um einen deutlichen Wärmeeintrag in das Formteil zu bewirken. Durch diesen Wärmeeintrag kann die Polymerisation des Bindemittels früher und vor allem im gesamten Formteil gleichmäßig in Gang gesetzt wird und zudem schneller ablaufen. Durch das frühere Starten und das schnellere Ablaufen der Polymerisation kann einem Verzug, insbesondere einem Stauchen des Formteils während der Herstellung effektiv entgegengewirkt werden, da das Formteil deutlich schneller eine vorbestimmte Festigkeit erreicht. Zudem kann eine Migration des Bindemittels in benachbarte Hohlräume noch besser verhindert werden, sodass feinste Strukturen an der Oberfläche des herzustellenden Formteils trotz großer Mengen an Bindemittel noch besser erhalten bleiben.

Die Erfindung wurde zuvor anhand von bevorzugten Ausführungsbeispielen beschrieben. Es sind jedoch weitere Ausführungsformen und Abwandlungen möglich.

### Bezugszeichen:

- 1: Plattform des 3D-Druckers
- 2: Pulverbeschichter des 3D-Druckers
- 3: Druckkopf des 3D-Druckers
- 4: Wände des 3D-Druckers bzw. des Bauraums des 3D-Druckers
- 5: Partikelschicht
- 10: Boden des Bauraums
- 20: heißes Gas
- B: Bindemittel
- G: Grenzfläche des herzustellenden Formteils
- H: Hohlräume zwischen den Kunststoffpartikeln P
- K: Kontaktstellen der Kunststoffpartikel P
- P: Kunststoffpartikel
- S1: Verfahrensschritt "Partikelschicht aufbringen"
- S2: Verfahrensschritt "Partikelschicht erwärmen"
- S3: Verfahrensschritt "Bindemittel aufbringen"

## Patentansprüche

1. Binder-Jetting-Verfahren zum Herstellen eines dreidimensionalen Formteils in einem additiven Fertigungsverfahren, wobei
- in einem ersten Schritt (S1) ein pulverförmiges Ausgangsmaterial (P) als Partikelschicht in einen Bauraum eingebracht wird,
- in einem zweiten Schritt (S3) ein flüssiges Bindemittel selektiv auf die Partikelschicht aufgebracht wird,
wobei die Schritte (S1 bis S3) solange wiederholt werden, bis das Formteil aufgebaut ist,
wobei als Ausgangsmaterial (P) ein Polymerpulver verwendet wird, und dieses auf eine vorbestimmte erste Temperatur erwärmt wird (S2),
wobei
- das Ausgangsmaterial vor dem Aufbringen des Bindemittels auf die Partikelschicht auf die vorbestimmte erste Temperatur erwärmt wird,
- die vorbestimmte erste Temperatur so gewählt wird, dass sie unterhalb der Schmelztemperatur des Ausgangsmaterials liegt, und
- als Bindemittel ein das Polymerpulver lösendes und polymerisierbares Lösungsmittel verwendet wird,
wobei durch das Erwärmen des Ausgangsmaterials auf die vorbestimmte erste Temperatur ein Anlösen der Partikel durch das aufgebrachte Bindemittel beschleunigt wird und durch das beschleunigte Anlösen der Partikel die Erhöhung der Viskosität des Bindemittels beschleunigt wird.

2. Verfahren nach Anspruch 1, wobei das Ausgangsmaterial
- beim Einbringen in den Bauraum, oder
- nach dem Einbringen in den Bauraum, oder
- vor dem Einbringen in den Bauraum
auf die vorbestimmte erste Temperatur erwärmt wird.

3. Verfahren nach Anspruch 2, wobei die Partikelschicht selektiv an jenen Bereichen auf die vorbestimmte erste Temperatur erwärmt wird, an denen im nachfolgenden zweiten Schritt (S3) das Bindemittel aufgebracht wird.

4. Verfahren nach Anspruch 1, wobei in dem zweiten Schritt (S3) so viel Bindemittel selektiv auf die Partikelschicht aufgebracht wird, dass in dem selektierten Bereich mindestens 30%, vorzugsweise mindestens 50%, besonders bevorzugt mindestens 70% des Hohlraumes zwischen den Partikeln mit dem Bindemittel ausgefüllt wird, wobei das Bindemittel
- vor dem Aufbringen,
- beim Aufbringen oder
- nach dem Aufbringen
auf die Partikelschicht auf eine zweite Temperatur erwärmt wird.

5. Verfahren nach Anspruch 3, wobei die Partikelschicht an jenen Bereichen zumindest abschnittsweise auf eine vorbestimmte dritte Temperatur erwärmt wird, an denen im nachfolgenden zweiten Schritt (S3) kein Bindemittel aufgebracht wird.

6. Verfahren nach Anspruch 1, wobei auf jene Abschnitte der Partikelschicht, die nicht zum herzustellen Formteil gehören, so viel Bindemittel aufgebracht wird, dass in diesen Abschnitten maximal 30%, vorzugsweise maximal 15%, besonders bevorzugt maximal 5% des Hohlraumes zwischen den Partikeln mit dem Bindemittel ausgefüllt wird.

7. Verfahren nach Anspruch 1, wobei das Polymerpulver langkettige Polymere aufweist.

8. Verfahren nach Anspruch 1, wobei Polymerpulver kugelförmige Partikel aufweist, wobei der Durchmesser der Partikel vorzugsweise der Druckauflösung der Vorrichtung zum Herstellen des dreidimensionalen Formteils entspricht.

9. Verfahren nach Anspruch 1, wobei der Bauraum während des Herstellens des dreidimensionalen Formteils von unten und/oder von den Seiten her gekühlt oder erwärmt wird.

10. Verfahren nach Anspruch 1, wobei über den Boden des Bauraums ein heißes Gas mit einem vorbestimmten Druck zugeführt wird, wobei der vorbestimmte Druck derart gewählt wird, dass das zugeführte heiße Gas mit einer vorbestimmten Geschwindigkeit von unten nach oben durch die Partikelschichten gedrückt wird.

11. Verfahren nach dem vorhergehenden Anspruch, wobei die Temperatur des Gases so gewählt wird, dass sie oberhalb der Zerfallstemperatur eines in den Partikeln enthaltenen Initiators liegt und/oder wobei das Gas ein inertes Gas, insbesondere Stickstoff umfasst.

12. Verfahren nach Anspruch 1, wobei das Bindemittel einen Katalysator aufweist, mit dem eine Polymerisation des Bindemittels, insbesondere nach dem Aufbringen auf die Partikelschicht, in Gang gesetzt wird.

## Claims

1. Binder jetting method for producing a three-dimensional molded part in an additive manufacturing method, wherein
- in a first step (S1), a powder starting material (P) is introduced, as a particle layer, into an installation space,
- in a second step (S3), a liquid binder is selectively applied to the particle layer,
wherein the steps (S1 to S3) are repeated until the molded part is built up,
wherein a polymer powder is used as the starting material (P) and this powder is heated to a predetermined first temperature (S2), wherein
- the starting material is heated to the predetermined first temperature before the binder is applied to the particle layer,
- the predetermined first temperature is selected so that it is below the melting temperature of the starting material, and
- a polymerizable solvent which dissolves the polymer powder is used as a binder,
wherein heating the starting material to the predetermined first temperature accelerates the dissolving of the particles by the applied binder and the accelerated dissolving of the particles accelerates the increase in the viscosity of the binder.

2. Method according to claim 1, wherein the starting material is heated to the predetermined first temperature
- during introduction into the installation space, or
- after introduction into the installation space, or
- before introduction into the installation space.

3. Method according to claim 2, wherein the particle layer is selectively heated to the predetermined first temperature at the regions at which the binder is applied in the subsequent second step (S3).

4. Method according to claim 1, wherein, in the second step (S3), so much binder is selectively applied to the particle layer that at least 30%, preferably at least 50%, particularly preferably at least 70%, of the cavity between the particles is filled with the binder in the selected region, wherein the binder is heated to a second temperature on the particle layer
- before application,
- during application, or
- after application.

5. Method according to claim 3, wherein the particle layer is heated at least in portions to a predetermined third temperature at the regions at which binder is not applied in the subsequent second step (S3).

6. Method according to claim 1, wherein so much binder is applied to the portions of the particle layer which are not part of the molded part that a maximum of 30%, preferably a maximum of 15%, particularly preferably a maximum of 5%, of the cavity between the particles is filled with the binder in these portions.

7. Method according to claim 1, wherein the polymer powder has long-chain polymers.

8. Method according to claim 1, wherein polymer powder has spherical particles, wherein the diameter of the particles preferably corresponds to the printing resolution of the device for producing the three-dimensional molded part.

9. Method according to claim 1, wherein the installation space is cooled or heated from below and/or from the sides while the three-dimensional molded part is being produced.

10. Method according to claim 1, wherein a hot gas at a predetermined pressure is supplied via the floor of the installation space, wherein the predetermined pressure is selected such that the supplied hot gas is pushed through the particle layers from bottom to top at a predetermined speed.

11. Method according to the preceding claim, wherein the temperature of the gas is selected such that it is above the decomposition temperature of an initiator contained in the particles, and/or wherein the gas comprises an inert gas, in particular nitrogen.

12. Method according to claim 1, wherein the binder has a catalyst with which polymerization of the binder, in particular after the binder is applied to the particle layer, is started.

## Revendications

1. Procédé de projection de liant permettant de produire une pièce moulée tridimensionnelle dans un procédé de fabrication additive, dans lequel
- dans une première étape (S1), un matériau de départ (P) sous forme de poudre est introduit en tant que couche de particules dans un espace de construction,
- dans une seconde étape (S3), un liant liquide est appliqué sélectivement sur la couche de particules,
dans lequel les étapes (S1 à S3) sont répétées jusqu'à ce que la pièce moulée soit construite,
dans lequel une poudre polymère est utilisée comme matériau de départ (P) et celle-ci est chauffée à une première température prédéfinie (S2), dans lequel
- le matériau de départ est chauffé à la première température prédéfinie avant l'application du liant sur la couche de particules,
- la première température prédéfinie est choisie de manière telle qu'elle se situe en dessous de la température de fusion du matériau de départ, et
- un solvant dissolvant la poudre polymère et polymérisable est utilisé comme liant,
dans lequel le chauffage du matériau de départ à la première température prédéfinie accélère une désagrégation des particules par le liant appliqué et la désagrégation accélérée des particules accélère l'augmentation de la viscosité du liant.

2. Procédé selon la revendication 1, dans lequel le matériau de départ est chauffé à la première température prédéfinie
- lors de l'introduction dans l'espace de construction, ou
- après l'introduction dans l'espace de construction, ou
- avant l'introduction dans l'espace de construction.

3. Procédé selon la revendication 2, dans lequel la couche de particules est chauffée sélectivement à la première température prédéfinie dans les zones dans lesquelles le liant est appliqué dans la seconde étape (S3) consécutive.

4. Procédé selon la revendication 1, dans lequel, dans la seconde étape (S3), on applique sélectivement, sur la couche de particules, une quantité de liant telle que, dans la zone sélectionnée, au moins 30 %, de préférence au moins 50 %, de manière particulièrement préférée au moins 70 % de l'espace creux entre les particules sont remplis de liant, dans lequel le liant est chauffé à une deuxième température
- avant l'application,
- lors de l'application ou
- après l'application
sur la couche de particules.

5. Procédé selon la revendication 3, dans lequel la couche de particules est chauffée à une troisième température prédéfinie au moins dans certaines sections dans les zones dans lesquelles aucun liant n'est appliqué dans la seconde étape (S3) consécutive.

6. Procédé selon la revendication 1, dans lequel on applique, sur les sections de la couche de particules qui n'appartiennent pas à la pièce moulée à produire, une quantité de liant telle que, dans lesdites sections, au maximum 30 %, de préférence au maximum 15 %, de manière particulièrement préférée au maximum 5 % de l'espace creux entre les particules sont remplis de liant.

7. Procédé selon la revendication 1, dans lequel la poudre polymère présente des polymères à longue chaîne.

8. Procédé selon la revendication 1, dans lequel la poudre polymère présente des particules sphériques, dans lequel le diamètre des particules correspond de préférence à la résolution d'impression du dispositif permettant de produire la pièce moulée tridimensionnelle.

9. Procédé selon la revendication 1, dans lequel l'espace de construction, pendant la production de la pièce moulée tridimensionnelle, est refroidi ou chauffé par le bas et/ou par les côtés.

10. Procédé selon la revendication 1, dans lequel un gaz chaud est acheminé à une pression prédéfinie par l'intermédiaire du fond de l'espace de construction, dans lequel la pression prédéfinie est choisie de manière telle que le gaz chaud acheminé est pressé à une vitesse prédéfinie à partir du bas vers le haut à travers les couches de particules.

11. Procédé selon la revendication précédente, dans lequel la température du gaz est choisie de manière telle qu'elle est supérieure à la température de décomposition d'un initiateur contenu dans les particules et/ou dans lequel le gaz comprend un gaz inerte, en particulier de l'azote.

12. Procédé selon la revendication 1, dans lequel le liant présente un catalyseur qui déclenche une polymérisation du liant, en particulier après l'application sur la couche de particules.
